# FASCICULE DE BREVET EUROPEEN

(11) **EP 2 764 609 B1**
(45) Date de publication et mention de la délivrance du brevet: **11.08.2021**
(21) Numéro de dépôt: 12779120.0
(22) Date de dépôt: 05.10.2012
(51) Int. Cl.: H02K 5/15

(54) **MOTEUR A INDUCTION LOGE DANS UN ACTIONNEUR TUBULAIRE ET PROCEDE D'ASSEMBLAGE DE CE MOTEUR**
INDUKTIONSMOTOR IN EINEM ROHRFÖRMIGEN STELLGLIED UND MONTAGEVERFAHREN FÜR DIESEN MOTOR
INDUCTION MOTOR HOUSED IN A TUBULAR ACTUATOR AND METHOD OF ASSEMBLING THIS MOTOR

(30) Priorité: 06.10.2011 FR 1159040
(43) Date de publication de la demande: 13.08.2014
(73) Titulaire: SOMFY ACTIVITES SA, 74300 Cluses (FR)
(72) Inventeur: BRONDEX, Adrien, F-74700 Domancy (FR); LANFROY, Vincent, F-74960 Cran Gevrier (FR)
(74) Mandataire: Verriest, Philippe
(86) Numéro de dépôt international: PCT/FR2012/052270
(87) Numéro de publication internationale: WO 2013/050723

(56) Documents cités:
- EP-A1- 0 406 431
- EP-A1- 0 410 933
- EP-A1- 2 237 396
- EP-A2- 0 184 724
- DE-A1- 4 139 984
- US-A- 2 462 204
- US-A- 5 945 759

## Description

La présente invention concerne un moteur à induction, destiné à être placé à l'intérieur d'un actionneur tubulaire pour applications domotiques, permettant notamment de dérouler et/ou enrouler toiles, stores, écrans, ou volets roulants, et un procédé d'assemblage de ce moteur.

Les moteurs à induction comprennent classiquement un stator comprenant un alésage à l'intérieur duquel est disposé un rotor. Le stator comprend des dents réparties régulièrement sur sa paroi interne et séparées par des encoches. Les dents supportent des bobines, qui s'étendent dans les encoches. Les bobines permettent l'établissement d'un champ magnétique tournant provoquant la rotation du rotor. L'ensemble des bobines forme le bobinage.

Il est souhaitable que les moteurs destinés à être logés dans des actionneurs pour applications domotiques émettent le moins de bruit possible pour le confort des utilisateurs. Le bruit a pour origine les vibrations à l'intérieur du moteur. Les vibrations sont généralement engrendrées par les jeux existants entre les composants du moteur et notamment l'excentricité du rotor dans l'alésage statorique.

Par ailleurs, une partie du bobinage forme classiquement saillie au-delà des extrémités du stator. Ces saillies sont appelées têtes de bobinage ou chignons. Leur détérioration, pendant ou après assemblage, notamment du fait de l'appui axial d'un composant sur le stator, peut provoquer le dysfonctionnement du moteur. Aussi est il important de protéger les chignons pour la fiabilité du moteur. Il est connu de protéger les chignons avec par exemple un organe de protection qui prévient leur contact avec l'arbre rotorique. Mais la présence de cet organe de protection tend à éloigner les paliers servant à assurer la rotation du rotor. Elle peut donc accroître l'excentricité. D'autres contraintes d'assemblages peuvent également conduire à maintenir les paliers de part et d'autre des organes de protection.

En particulier, il est connu du document de brevet EP2237396 un moteur à induction tubulaire à deux sens de rotation, contenu dans un tube d'un actionneur tubulaire destiné à être installé dans un bâtiment, ce moteur comprenant un rotor supporté par des paliers et un stator comportant un paquet de tôles formant un alésage central et centré dans le tube, dans lequel une pièce support du palier est centrée dans l'alésage central, et dans lequel le palier est de type lisse et conducteur, et disposé au plus près d'une bague de court-circuit du rotor, à moins de 2 mm ou 1 mm.

Cependant, les paliers sont agencés à distance du stator. Or plus les paliers sont distants du stator, plus il existe un risque d'excentricité du rotor. L'excentricité du rotor peut générer des vibrations, donc du bruit, en fonctionnement.

De plus, les paliers sont agencés dans une pièce support de palier qui, elle, est en appui contre le stator. Il existe donc, outre un jeu de fonctionnement entre la pièce support de palier et le stator, un jeu de fonctionnement entre cette pièce support et le palier qu'elle supporte. Cette multiplication des jeux dans la chaîne de côtes contribue à la génération de vibrations en fonctionnement.

Par ailleurs, il est connu du document de brevet EP0410933 un moto-réducteur tubulaire à double isolation comprenant un moteur constitué d'un stator solidaire d'un tube métallique et d'un rotor entraînant un réducteur.

Il comprend en outre une enveloppe isolante tubulaire disposée entre le stator et le tube. Le stator est muni de pièces d'extrémité présentant une partie de diamètre inférieur à celui du stator et autour desquelles l'enveloppe isolante vient se verrouiller axialement.

Cependant, là aussi, les paliers du moto-réducteur décrit dans le document de brevet EP0410933sont agencés à distance du stator. Par conséquent, la distance séparant ces deux paliers est relativement importante. Cette distance peut engendrer un problème d'excentricité du rotor. En fonctionnement, l'excentricité du rotor engendre des vibrations, donc du bruit.

Il est connu du document US 5 945 759 de réaliser un un moteur pas à pas ayant une structure dans laquelle le stator est disposé à l'extérieur d'un rotor monté sur un arbre rotatif, et une partie arrière et une portion avant de l'arbre rotatif sont supportés par des roulements montés sur des carters prévus sur les côtés avant et arrière du stator.

Ainsi, la présente invention vise à pallier tout ou partie de ces inconvénients en proposant un moteur à induction permettant un recentrage immédiat du rotor dans l'alésage statorique afin de limiter l'intensité du bruit émis en fonctionnement.

A cet effet, la présente invention a pour objet un moteur à induction, capable d'être logé dans le corps creux d'un actionneur sensiblement longitudinal pour l'enroulement/déroulement de toiles, écrans, stores ou volets roulants, caractérisé en ce que le moteur comprend:
(i) un stator,
(ii) un ensemble rotorique,
(iii) un bol, capable de protéger un chignon formé à une extrémité du stator, le bol comprenant une jupe intérieure,
(iv) des moyens de support de l'ensemble rotorique autorisant la rotation de l'ensemble rotorique par rapport au stator, les moyens de support comprenant un palier disposé à l'intérieur de la jupe intérieure, le palier comprenant une zone de double appui axial et radial contre le stator.

Ainsi, le moteur à induction selon l'invention permet grâce à un double appui axial et radial direct entre le palier et le rotor de diminuer la chaîne de côtes entre ces éléments, donc les jeux et vibrations associées. Il en résulte une intensité sonore moindre en fonctionnement, pour un meilleur confort des utilisateurs. Notamment, la chaîne de côtes entre le stator et le rotor comprend uniquement la côte du palier, sans autre élément intermédiaire, le palier assurant à lui-seul le contact tournant direct entre le stator et le rotor.

Selon une autre caractéristique du moteur selon l'invention, le palier comprend une paroi extérieure et la zone de double appui est formée par l'extrémité de la paroi extérieure du palier et une face d'une nervure annulaire située sur la paroi extérieure.

Selon une autre caractéristique du moteur selon l'invention, la nervure annulaire forme un premier épaulement conformé pour venir en appui axial contre le stator et délimite une portée conformée pour venir en appui radial contre le stator.

Selon l'invention, les moyens de support comprennent un roulement disposé à l'intérieur du palier.

Le roulement permet de diminuer davantage le bruit par rapport à l'utilisation d'un palier seul pour assurer la rotation du rotor par rapport au stator. Dans ce cas la chaîne de côtes entre le stator et le rotor comprend les côtes du palier et du roulement, sans autre élément intermédiaire. Selon l'invention, le palier comprend une paroi intérieure avec un épaulement orienté du côté opposé au stator, le roulement venant en appui contre l'épaulement. L'épaulement est orienté vers l'extérieur ; autrement dit, il fait face face à l'extérieur, et non au stator.

Cela permet un montage du roulement de l'extérieur vers l'intérieur, c'est-à-dire en direction du stator.

Avantageusement, le moteur comprend des moyens de contrainte du roulement en direction de l'épaulement.

Il peut s'agir d'un entraîneur monté serré sur l'arbre rotorique et en appui contre le roulement ou bien d'une bague solidaire de l'arbre sur laquelle prend appui un ressort précontraint venant plaquer le roulement contre l'épaulement. L'objectif de ces moyens de contrainte est de supprimer les jeux du roulement et de garantir le maintien des paliers contre le stator.

Selon un mode de réalisation, les moyens de contrainte comprennent un organe d'appui solidaire d'un arbre rotorique et des moyens de rappel tendant à plaquer le roulement contre l'épaulement.

Selon une forme d'exécution, l'ensemble rotorique comprend un rotor s'étendant au moins partiellement à l'intérieur du palier.

Avantageusement, le moteur comprend un élément électriquement isolant interposé entre le palier et la jupe intérieure.

Cela prévient les risques de contact électrique entre le chignon et un élément électriquement conducteur, de nature à provoquer un court-circuit à l'origine d'une panne du moteur.

Selon une autre caractéristique du moteur selon l'invention, le palier comprend une paroi extérieure recouverte par l'élément électriquement isolant, et comprenant un deuxième épaulement et un troisième épaulement opposés, contre lesquels vient en appui l'élément électriquement isolant, en vue de le bloquer axialement par rapport au palier.

Selon un mode de réalisation, l'élément électriquement isolant est surmoulé sur le palier.

Selon une autre caractéristique du moteur selon l'invention, le moteur comprend un deuxième palier similaire et les deux paliers sont disposés symétriquement dans le moteur.

De manière avantageuse, le bol est apte à centrer le stator dans le corps creux de l'actionneur sensiblement longitudinal. Par exemple, le bol comprend une jupe extérieure conformée pour épouser la forme de la paroi intérieure du corps creux de l'actionneur longitudinal, la jupe extérieure présentant un contour destiné à venir en appui contre une des extrémités du stator, le contour comprenant une pluralité de pattes s'étendant dans le prolongement de la jupe extérieure et chacune logée dans un évidement ménagé sur la circonférence extérieure du stator.

L'invention est exposée dans l'ensemble de revendications annexé. Les modes de réalisation et / ou exemples de la description suivante qui ne sont pas couverts par les revendications annexées sont considérés comme ne faisant pas partie de la présente invention.

Ces caractéristiques et d'autres de la présente invention, ainsi que leurs avantages, ressortiront clairement de la description qui suit d'un mode de réalisation d'un moteur à induction selon l'invention, donné à titre d'exemple non limitatif, en faisant référence aux dessins annexés dans lesquels :
- La figure 1 montre un moteur à induction selon un mode particulier de réalisation de l'invention,
- La figure 2 montre un détail de la figure 1,
- Les figures 3 et 4 sont des vues en perspective d'un bol équipant un moteur à induction selon un mode de réalisation de l'invention,
- La figure 5 est une vue en coupe d'un bol équipant un moteur à induction selon un mode de réalisation de l'invention,
- La figure 6 est une vue en perspective d'un palier équipant un moteur à induction selon un mode de réalisation de l'invention,
- La figure 7 est une vue de profil d'un palier destiné à équiper un moteur à induction selon un mode de réalisation de l'invention,
- La figure 8 est un détail de la figure 7,
- La figure 9 est une vue en coupe selon la ligne I - I de la figure 7,
- La figure 10 est une vue de profil d'un ensemble comprenant un palier et un élément isolant destiné à équiper un moteur à induction selon un mode de réalisation de l'invention,
- La figure 11 est une vue de dessus de l'ensemble comprenant un palier et un élément isolant destiné à équiper un moteur à induction selon un mode de réalisation de l'invention,
- La figure 12 est une vue en coupe selon la ligne II - Il de la figure 11,
- La figure 13 est un détail de la figure 12.

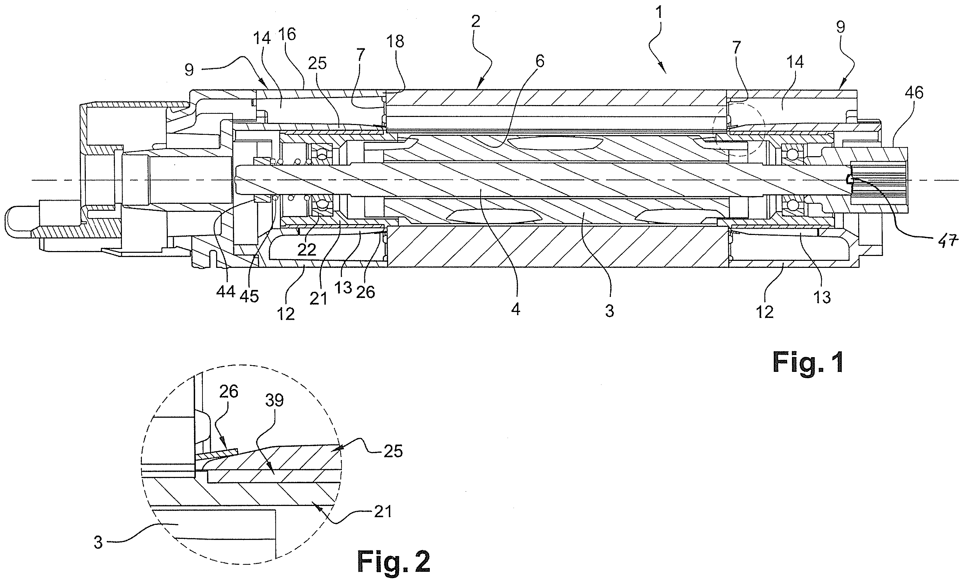

La figure 1 montre un moteur 1 à induction selon un mode particulier de réalisation de l'invention. Le moteur 1 peut être à double sens de rotation. Il comprend notamment un stator 2 et un ensemble rotorique. L'ensemble rotorique comporte un rotor 3, par exemple à cage d'écureuil. Le rotor 3 est solidaire d'un arbre 4.

Le moteur 1 est destiné à être inséré dans le corps creux d'un actionneur (non représenté) sensiblement longitudinal. Cet actionneur est destiné à être fixé à un bâtiment, horizontalement, et à servir à des applications domotiques, par exemple l'enroulement/déroulement de toiles, d'écrans, de stores ou de volets roulants. Ainsi, le moteur 1 est de forme sensiblement tubulaire. Autrement dit, la longueur du stator 2 est généralement plus importante que son diamètre extérieur.

Le stator 2 peut comprendre un paquet de tôles formant un alésage central 6. Le rotor 3 est disposé à l'intérieur de l'alésage central 6.

Le stator 2 est centré dans le corps creux de l'actionneur longitudinal.

Le stator 2 comprend, sur la circonférence de son alésage central 6, une pluralité de rainures (non visibles) s'étendant axialement et débouchant à chaque extrémité 7 du stator 2. Ces rainures sont également appelées encoches statoriques.

Les encoches statoriques délimitent entre elles des dents (non visibles) autour desquelles sont enroulées des bobines. L'ensemble des bobines forme le bobinage.

Une partie du bobinage s'étend généralement au-delà des extrémités 7 du stator 2, et forme des excroissances ou saillies appelées chignons. Ainsi, le stator 2 présente à chaque extrémité 7 un chignon (non représenté). Afin d'éviter le dysfonctionnement du moteur 1, les chignons doivent être protégés et isolés.

Le moteur 1 comprend des moyens de protection de chaque chignon. Dans l'exemple des figures 1 à 5, les moyens de protection comprennent un bol 9 formant boîtier de protection. Le bol 9 présente une base 11 depuis laquelle s'étendent une jupe extérieure 12 et une jupe intérieure 13.

La jupe extérieure 12 et la jupe intérieure 13 délimitent entre elles un espace 14, dans lequel s'étend chaque chignon. Le moteur 1 présenté à la figure 1 comprend deux bols 9, à chaque extrémité 7 du stator 2. Les deux bols 9 sont similaires, et sont disposés symétriquement de part et d'autre du stator 2. Les bols 9 peuvent être réalisés en matière isolante souple ou rigide déformable. En particulier, la jupe intérieure 13 est déformable sous l'action d'un effort radial centrifuge.

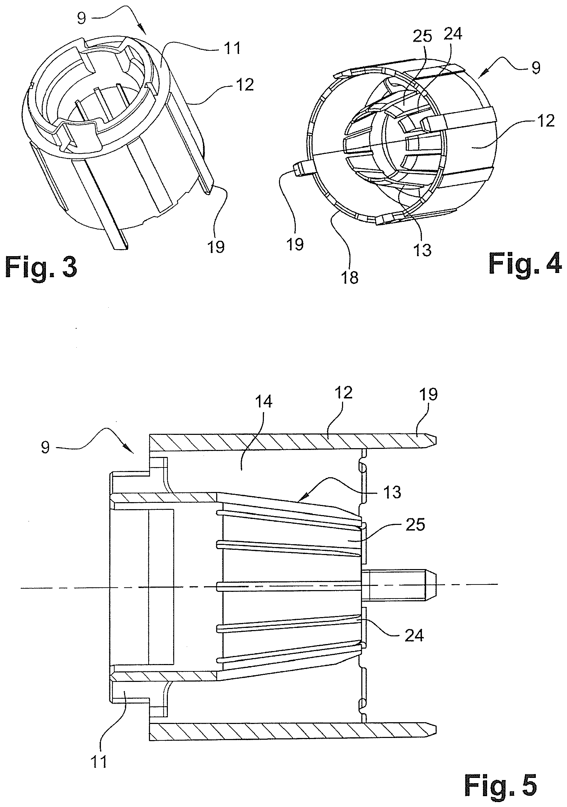

La jupe extérieure 12 comprend une portée 16. La portée 16 est conformée pour venir en appui contre la paroi intérieure du corps creux de l'actionneur longitdunal dans lequel est destiné à être inséré le moteur 1. Dans le mode de réalisation illustré aux figures 3 à 5, la jupe extérieure 12 présente une forme cylindrique.

A l'opposé de la base 11, la jupe extérieure 12 présente un contour 18 destiné à venir en appui contre une des extrémités 7 du stator 2. Selon le mode de réalisation des figures 3 à 5, le contour 18 comprend une pluralité de pattes 19. Les pattes 19 s'étendent dans le prolongement de la jupe extérieure 12. Chaque patte 19 est conformée pour être logée dans un évidement (non visible) ménagé sur la circonférence extérieure du stator 2. Ainsi, les pattes 19 préviennent tout mouvement relatif radial entre le stator 2 et chaque bol 9. De plus, la jupe extérieure 12 est conformée pour épouser la forme de la paroi intérieure du corps creux de l'actionneur longitudinal. Ainsi, grâce à la jupe extérieure 12, les bols 9 permettent de centrer le stator 2 dans l'actionneur longitudinal.

Chaque jupe intérieure 13 permet de protéger un chignon pendant et après l'assemblage du moteur 1. Selon le mode de réalisation illustré aux figures 3 à 5, la jupe intérieure 13 présente une forme tronconique. L'intérieur de la jupe intérieure 13 est destiné à recevoir des moyens de support de l'arbre 4. Les moyens de support peuvent comprendre un palier 21 et un roulement 22 (par exemple à billes) qui seront décrits plus en détail ci-après.

La jupe intérieure 13 est destinée à se déformer lorsque les moyens de support sont mis en place. Lors de l'assemblage du bol 9 contre le stator 2, la jupe intérieure 13 est dans une position de repos : elle n'est pas déformée, car les moyens de support sont absents. Par conséquent, l'espace 14 présente une ouverture maximale. L'ouverture maximale de l'espace 14 facilite la mise en place de chaque bol 9 sans risque de blesser le chignon.

Comme illustré aux figures 3 à 5, la jupe intérieure 13 est fendue d'une pluralité d'entailles 24. Deux entailles 24 successives délimitent entre elles une languette 25.

Les languettes 25 présentent une extrémité liée à la base 11 et une extrémité libre. Elles sont aptes à se déformer lorsque les moyens de support de l'ensemble rotorique sont insérés dans la jupe intérieure 13. Les extrémités libres des languettes 25 délimitent un contour de diamètre inférieur au diamètre de l'alésage central 6. Le diamètre de ce contour est aussi inférieur au plus grand diamètre extérieur du palier 21.

Le moteur 1 peut comprendre des cales 26 représentées sur la figure 2, disposées à chaque extrémité 7 statorique et destinées à servir d'isolation électrique au stator. Ces cales 26 ne doivent pas être déplacées ou dégradées lors du montage (demande des normes UL et européennes).

Le nombre de languettes 25 peut être égal au nombre d'encoches statoriques et au nombre de dents du stator 2. Le cas échéant, chaque languette 25 est disposée dans la prolongation de l'une des dents du stator 2. Le risque qu'une partie du chignon traverse une des entailles 24 et soit abîmé est ainsi amoindri.

Alternativement, pour un même résultat, la jupe intérieure 13 est fabriquée à partir de plastique à mémoire de forme. Elle est ainsi destinée à se déformer lorsque les moyens de support sont mis en place, protégeant ainsi les chignons tout en venant en appui sur le palier 21.

Le moteur 1 représenté sur la figure 1 comprend deux paliers 21 similaires, et deux roulements 22. Les paliers 21 et les roulements 22 sont placés symétriquement de part et d'autre du stator 2. Les paliers 21 sont par exemple fariqués en métal fritté ou en métal usiné.

Lors de l'insertion du bol 9 par-dessus les chignons, le diamètre de l'extrémité libre de la jupe intérieure 13 étant inférieur au diamètre de l'alésage central 6, le risque de déplacer axialement les cales 26 ou de blesser les chignons est très faible voire inexistant.

Chaque palier 21 est ensuite disposé à l'intérieur de l'une des jupes intérieures 13. Lorsque le palier 21 est en place dans la jupe intérieure 13 correspondante, celle-ci présente une déformation essentiellement radiale. L'espace 14 est alors restreint, mais les cales 26 et le chignon ont été protégés au cours de la mise en place des moyens de support. En effet les extrémités libres des languettes 25 viennent repousser radialement les cales 26 et les chignons, sans les déplacer axialement. De plus, grâce à cette configuration, les moyens de support peuvent être placés au plus près du stator 2 pour un meilleur guidage.

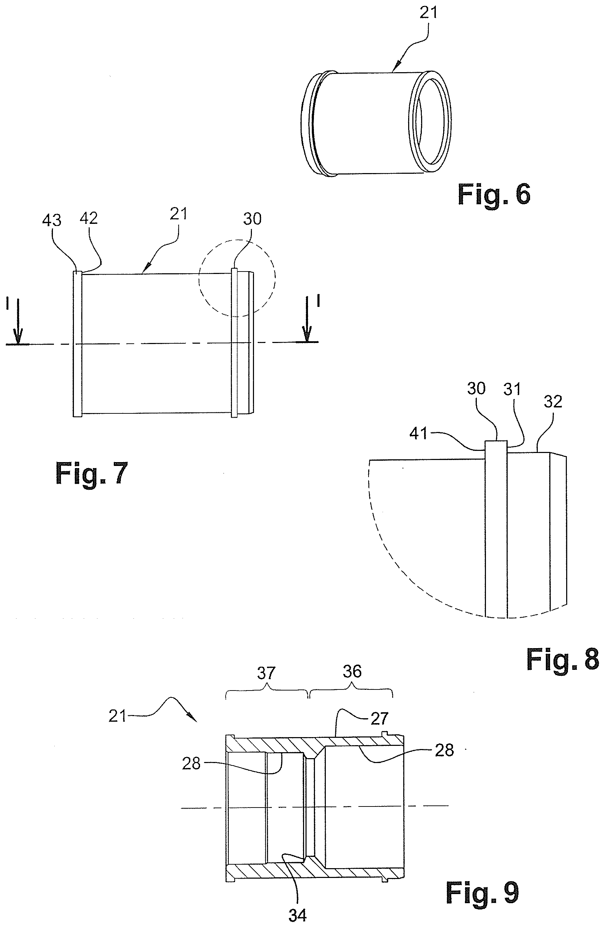

Comme cela est visible sur les figures 6 à 9, chaque palier 21 peut être de forme sensiblement cylindrique. Chaque palier 21 comprend une paroi extérieure 27 et une paroi intérieure 28.

La paroi extérieure 27 comprend une nervure annulaire 30. La nervure annulaire 30 est agencée pour former un premier épaulement 31. Le premier épaulement 31 est destiné à venir en appui direct contre l'une des extrémités 7 du stator 2.

La nervure annulaire 30 est également agencée pour former une portée 32. La portée 32 est destinée à venir en appui direct contre une paroi intérieure de l'alésage central 6.

Ainsi, chaque palier 21 est en appui direct axial d'une part, et en appui direct radial d'autre part, contre le stator 2. Ces appuis directs réduisent la chaîne de cotes entre le rotor 3 et le stator 2. Ils permettent donc un meilleur centrage du rotor 3 dans l'alésage central 6. Cela limite les problèmes de bruit dus à l'excentricité du rotor 3 et du stator 2.

La paroi intérieure 28 comprend un épaulement 34. Chaque roulement 22 est destiné à venir à proximité ou en appui contre l'épaulement 34 correspondant. En principe, un jeu est laissé au montage entre le roulement et l'épaulement pour ne pas risquer de dégrader le roulement lors de la mise en place sous contrainte ainsi que lors d'une chute éventuelle de l'actionneur. L'épaulement 34 est orienté vers l'extérieur, c'est-à-dire opposé au stator 2, de sorte que le montage des roulements 22 s'effectue après celui des paliers 21.

L'épaulement 34 marque la démarcation d'un premier tronçon 36 et d'un deuxième tronçon 37 de palier 21. Le diamètre intérieur du premier tronçon 36 est supérieur au diamètre intérieur du deuxième tronçon 37, de sorte que le rotor 3 s'étend partiellement dans le premier tronçon 36 de chaque palier 21. Ces différentes démarcations permettent de garantir la rigidité du palier 21 tout en accommodant l'extrémité du rotor 3.

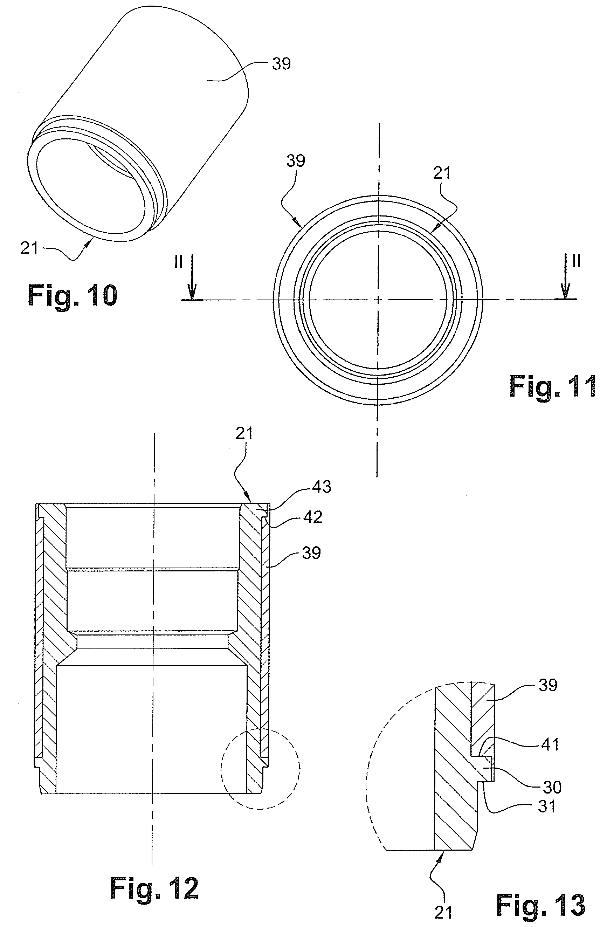

Le moteur 1 peut comprendre un élément 39 électriquement isolant, visible par exemple sur les figures 10 à 13. L'élément 39 électriquement isolant est destiné à recouvrir la paroi extérieure 27 de chaque palier 21 afin de prévenir un contact électrique de nature à provoquer un court-circuit entre un chignon et un élément électriquement conducteur du moteur 1. Une sécurité électrique peut être réalisée par l'élément 39.

Comme cela est représenté sur la figure 12, la paroi extérieure 27 du palier 21 peut comprendre un deuxième épaulement 41, également formé par la nervure annulaire 30, et un troisième épaulement 42, formé par une collerette 43. L'élément 39 électriquement isolant est conformé pour coopérer avec le deuxième épaulement 41 et le troisième épaulement 42. Le deuxième épaulement 41 et le troisième épaulement 42 permettent de positionner et maintenir axialement en position l'élément 39 électriquement isolant.

L'élément 39 électriquement isolant peut être surmoulé. Il recouvre avantageusement la nervure annulaire 30 et la collerette 43, comme cela est visible sur les figures 10 à 13.

Afin de bloquer les roulements 22 à l'intérieur de chaque palier 21, le moteur 1 peut comprendre un organe 44 d'appui solidaire d'une extrémité de l'arbre 4 rotorique, et des moyens de rappel, par exemple un ressort 45 précontraint, prenant appui contre l'organe 44 et tendant à repousser le roulement 22 vers l'épaulement 34. A une autre extrémité de l'arbre 4 rotorique, un entraîneur 46, destiné à coopérer avec un réducteur (non représenté), peut être monté serré sur l'arbre 4, en appui éventuel sur le roulement 22 correspondant.

L'assemblage du moteur 1 à induction est décrit ci-après.

Selon une première possibilité, il s'agit d'abord de mettre en place les bols 9 contre chaque extrémité 7 du stator 2 afin de protéger les chignons en les logeant dans l'espace 14 délimité entre la jupe extérieure 12 et la jupe intérieure 13 de chaque bol 9. A ce stade, les jupes intérieures 13 ne sont pas déformées. L'espace 14 présente donc une ouverture maximale qui permet d'y insérer les chignons sans danger.

Il s'agit ensuite de mettre en place les moyens de support de l'ensemble rotorique, à un côté du stator 2. Il s'agit donc d'insérer un palier 21 dans le bol 9 correspondant, avantageusement en l'appuyant directement contre le stator 2. La mise en place du palier 21 provoque la déformation progressive de la jupe intérieure 13 dans laquelle il est inséré. Le chignon au contact de la jupe intérieure 13 est délicatement repoussé mais reste protégé du palier 21. Le palier 21 est inséré jusqu'à ce que le premier épaulement 31 et la portée 32 viennent en appui contre le stator 2. Cette étape consiste également, dans la forme de réalisation présentée sur la figure 1, à insérer un roulement 22 dans le palier 21, et à chasser ce roulement 22 vers l'épaulement 34. Il est à noter que le palier 21 et le roulement 22 sont insérés de l'extérieur vers l'intérieur, c'est-à-dire en direction du stator 2.

Il reste à contraindre ce roulement 22 pour le maintenir plaqué dans la direction de l'épaulement 34, mettre en place sur le rotor 3 les moyens de support destinés à être disposés de l'autre côté du stator 2, puis insérer le rotor 3 sur lequel on vient de placer un palier 21 dans l'autre bol 9 et l'alésage central 6 du stator 2. Au cours de cette insertion, le palier 21 préalablement disposé sur le rotor 3 repousse les languettes 25 de la jupe intérieure 13 de cet autre bol 9. Ce palier 21 vient, comme le précédent, en appui direct axial et radial contre le stator 2.

Selon une deuxième possibilité, préférée, l'assemblage peut comprendre les étapes décrites ci-après.

Selon une étape, deux premiers sous-ensembles peuvent être réalisés par assemblage de chacun des roulements 22 dans le palier 21 correspondant. Cette étape peut être mise en œuvre sur un même poste de travail, car les paliers 21 peuvant être identiques. Ce poste de travail peut être à part du ou des postes de travail permettant la mise en œuvre des autres étapes du procédé de montage.

Selon une autre étape, un deuxième sous-ensemble est réalisé par assemblage de l'ensemble rotorique (rotor 3 et arbre 4), de l'un des deux premiers sous-ensembles formés par l'assemblage de l'un des roulements 22 dans l'un des paliers 21, et éventuellement de l'entraîneur 46, placé en appui contre ce roulement 22. Ces pièces (ensemble rotorique, roulement 22 préalablement assemblé au palier 21, et le cas échéant entraîneur 46) peuvent être chassées.

Selon une étape supplémentaire, un troisième sous-ensemble est réalisé par assemblage des deux bols 9 sur le stator 2 (un bol 9 à chaque extrémité du stator 2).

Selon encore une autre étape, le deuxième sous-ensemble (ensemble rotorique, roulement 22 préalablement assemblé au palier 21, et le cas échéant entraîneur 46), le troisième sous-ensemble (stator 2 assemblé aux deux bols 9), et le premier sous-ensemble restant (roulement 22 assemblé au palier 21) sont assemblés les uns aux autres. Cet assemblage peut être réalisé par chassage, au cours d'une même opération. On notera par ailleurs que, pour la mise en œuvre de cette étape, le poste de travail correspondant peut comprendre un doigt de guidage, destiné à se positionner dans un logement 47 ménagé sur l'axe 4 du rotor 3. Cela permet d'éviter un défaut d'alignement de l'axe du rotor avec le centre de roulement.

Selon une dernière étape, le ressort 45 peut être mis en place, en appui contre l'un des roulements 22 (le cas échéant autre que celui contre lequel est en appui l'entraîneur 46), pour mettre en pré-contrainte axiale (selon l'axe 4) l'ensemble ainsi formé.

Le ressort 45 peut réaliser un appui axial suffisant pour éviter des jeux trop importants qui peuvent engendrer du bruit en fonctionnement. Le chassage permet toutefois de réduire davantage encore les jeux existants.

Ce procédé, bien que plus complexe que celui précédemment décrit, est plus économique, car le chassage des paliers 21 est simultané (chassage lors d'une même opération du deuxième sous-ensemble, du troisième sous-ensemble, et du premier sous-ensemble restant).

## Revendications

1. Moteur (1) à induction, adapté pour être logé dans le corps creux d'un actionneur sensiblement longitudinal pour l'enroulement/déroulement de toiles, écrans, stores ou volets roulants, le moteur (1) comprend :
(i) un stator (2),
(ii) un ensemble rotorique,
(iii) un bol (9), configuré pour protéger un chignon formé à une extrémité (7) du stator (2), le bol (9) comprenant une jupe intérieure (13),
(iv) des moyens de support de l'ensemble rotorique configuré pour autoriser la rotation de l'ensemble rotorique par rapport au stator (2), les moyens de support comprenant un palier (21) disposé à l'intérieur de la jupe intérieure (13), le palier (21) comprenant une zone de double appui axial et radial contre le stator (2) ;
(v) dans lequel les moyens de support comprennent un roulement (22) disposé à l'intérieur du palier (21) et **caractérisé en ce que** ;
(vi) le palier (21) comprend une paroi intérieure (28) avec un épaulement (34) orienté du côté opposé au stator (2), de sorte que le montage du roulement est configuré pour s'effectuer après celui du palier, le roulement (22) venant en appui contre l'épaulement (34).

2. Moteur (1) à induction selon la revendication 1, **caractérisé en ce que** le palier (21) comprend une paroi extérieure (27) et **en ce que** la zone de double appui est formée par l'extrémité de la paroi extérieure (27) du palier (21) et une face d'une nervure annulaire (30) située sur la paroi extérieure (27).

3. Moteur (1) à induction selon la revendication 2, **caractérisé en ce que** la nervure annulaire (30) forme un premier épaulement (31) conformé pour venir en appui axial contre le stator (2) et délimite une portée (32) conformée pour venir en appui radial contre le stator (2).

4. Moteur (1) à induction selon la revendication 1, **caractérisé en ce qu'**il comprend des moyens de contrainte du roulement (22) en direction de l'épaulement (34).

5. Moteur (1) à induction selon la revendication 4, **caractérisé en ce que** les moyens de contrainte comprennent un organe (44) d'appui solidaire d'un arbre (4) rotorique et des moyens de rappel configurés pour plaquer le roulement (22) contre l'épaulement (34).

6. Moteur (1) à induction selon l'une des revendications 1 à 5, **caractérisé en ce que** l'ensemble rotorique comprend un rotor (3) s'étendant au moins partiellement à l'intérieur du palier (21).

7. Moteur (1) à induction selon l'une des revendications 1 à 6, **caractérisé en ce qu'**il comprend un élément (39) électriquement isolant interposé entre le palier (21) et la jupe intérieure (13).

8. Moteur (1) à induction selon la revendication 7, **caractérisé en ce que** le palier (21) comprend une paroi extérieure (27) recouverte par l'élément (39) électriquement isolant, et comprenant un deuxième épaulement (41) et un troisième épaulement (42) opposés, contre lesquels vient en appui l'élément (39) électriquement isolant, étant configuré pour le bloquer axialement par rapport au palier (21).

9. Moteur (1) à induction selon l'une des revendications 7 ou 8, **caractérisé en ce que** l'élément (39) électriquement isolant est surmoulé sur le palier (21).

10. Moteur (1) à induction selon l'une des revendications 1 à 9, **caractérisé en ce que** le moteur (1) comprend un deuxième palier (21) similaire et **en ce que** les deux paliers (21) sont disposés symétriquement dans le moteur (1).

11. Moteur (1) à induction selon l'une des revendications 1 à 9, **caractérisé en ce que** le bol (9) comprend une jupe extérieure (12) configurée pour épouser la forme de la paroi intérieure du corps creux de l'actionneur longitudinal, la jupe extérieure (12) présentant un contour (18) destiné à venir en appui contre une des extrémités (7) du stator (2), le contour (18) comprenant une pluralité de pattes (19) s'étendant dans le prolongement de la jupe extérieure (12) et chacune logée dans un évidement ménagé sur la circonférence extérieure du stator (2), de sorte que le bol (9) est configuré à centrer le stator (2) dans le corps creux de l'actionneur sensiblement longitudinal.

## Patentansprüche

1. Induktionsmotor (1), der zur Unterbringung im Hohlkörper eines etwa länglichen Aktuators für das Aufwickeln/Abwickeln von Vorhängen, Schirmen Markisen oder Rollläden geeignet ist, wobei der Motor (1) umfasst:
(i) einen Stator (2),
(ii) eine Rotorgruppe,
(iii) eine Schale (9), die ausgelegt ist, um ein Bündel zu schützen, das an einem Ende (7) des Stators (2) gebildet ist, wobei die Schale (9) eine innere Einfassung (13) umfasst,
(iv) Trägermittel der Rotorgruppe, die ausgelegt sind, um die Rotation der Rotorgruppe im Verhältnis zum Stator (2) zu gestatten, wobei die Trägermittel eine Lagerung (21) umfassen, die im Inneren der inneren Einfassung (13) angeordnet ist, wobei die Lagerung (21) eine Zone doppelter axialer und radialer Abstützung auf dem Stator (2) umfasst,
(v) wobei die Trägermittel ein Lager (22) umfassen, das im Inneren der Lagerung (21) angeordnet ist und **dadurch gekennzeichnet, dass**:
(vi) die Lagerung (21) eine innere Wand (28) mit einem Absatz (34) umfasst, der zur Seite gegenüber dem Stator ausgerichtet ist, so dass die Montage des Lagers ausgelegt ist, um nach der der Lagerung zu erfolgen, wobei sich das Lager (22) auf dem Absatz (34) abstützt.

2. Induktionsmotor (1) nach Anspruch 1, **dadurch gekennzeichnet, dass** die Lagerung (21) eine äußere Wand (27) umfasst und dass die Zone doppelter Abstützung von dem Ende der äußeren Wand (27) der Lagerung (21) und einer Fläche einer ringförmigen Rippe (30) gebildet ist, die sich auf der äußeren Wand (27) befindet.

3. Induktionsmotor (1) nach Anspruch 2, **dadurch gekennzeichnet, dass** die ringförmige Rippe (30) einen ersten Absatz (31) bildet, der ausgebildet ist, um sich axial auf dem Stator (2) abzustützen und von einem Umfang (32) begrenzt ist, der ausgebildet ist, um sich radial auf dem Stator (2) abzustützen.

4. Induktionsmotor (1) nach Anspruch 1, **dadurch gekennzeichnet, dass** er Spannmittel des Lagers (22) in Richtung des Absatzes (34) umfasst.

5. Induktionsmotor (1) nach Anspruch 4, **dadurch gekennzeichnet, dass** die Spannmittel ein Stützorgan (44) umfassen, das mit einer Rotorwelle (4) fest verbunden ist, und Rückstellmittel, die ausgelegt sind, um das Lager (22) auf den Absatz (34) zu drücken.

6. Induktionsmotor (1) nach einem der Ansprüche 1 bis 5, **dadurch gekennzeichnet, dass** die Rotorgruppe einen Rotor (3) umfasst, der sich mindestens teilweise im Inneren der Lagerung (21) erstreckt.

7. Induktionsmotor (1) nach einem der Ansprüche 1 bis 6, **dadurch gekennzeichnet, dass** er ein elektrisch isolierendes Element (39) umfasst, das zwischen der Lagerung (21) und der inneren Einfassung (13) angeordnet ist.

8. Induktionsmotor (1) nach Anspruch 7, **dadurch gekennzeichnet, dass** die Lagerung (21) eine äußere Wand (27) umfasst, die von dem elektrisch isolierenden Element (39) bedeckt ist, und einen zweiten Absatz (41) und einen dritten Absatz (42) umfasst, die gegenüberliegen, auf denen sich das elektrisch isolierende Element (39) abstützt, um es axial im Verhältnis zur Lagerung (21) zu blockieren.

9. Induktionsmotor (1) nach einem der Ansprüche 7 oder 8, **dadurch gekennzeichnet, dass** das elektrisch isolierende Element (39) auf der Lagerung (21) aufgeformt ist.

10. Induktionsmotor (1) nach einem der Ansprüche 1 bis 9, **dadurch gekennzeichnet, dass** der Motor (1) eine ähnliche zweite Lagerung (21) umfasst und dass die zwei Lagerungen (21) symmetrisch im Motor (1) angeordnet sind.

11. Induktionsmotor (1) nach einem der Ansprüche 1 bis 9, **dadurch gekennzeichnet, dass** die Schale (9) eine äußere Einfassung (12) umfasst, die ausgelegt ist, um die Form der inneren Wand des Hohlkörpers des länglichen Aktuators anzunehmen, wobei die äußere Einfassung (12) eine Kontur (18) aufweist, die bestimmt ist, sich auf einem der Enden (7) des Stators (2) abzustützen, wobei die Kontur (18) eine Vielzahl von Füßen (19) umfasst, die sich in der Verlängerung der äußeren Einfassung (12) erstrecken und die jeweils in einer Ausnehmung untergebracht sind, die auf dem äußeren Umkreis des Stators (2) ausgebildet ist, so dass die Schale (9) ausgelegt ist, um den Stator (2) im Hohlkörper des etwa länglichen Aktuators zu zentrieren.

## Claims

1. An induction motor (1), adapted to be housed in the hollow body of a substantially longitudinal actuator for winding/unwinding canvases, screens, blinds or roller shutters, the motor (1) comprises:
(i) a stator (2),
(ii) a rotor assembly,
(iii) a bowl (9), configured so as to protect a winding head formed at one end (7) of the stator (2), the bowl (9) comprising an internal skirt (13),
(iv) means for supporting the rotor assembly configured to enable rotation of the rotor assembly relative to the stator (2), the support means comprising a journal (21) disposed inside the internal skirt (13), the bearing (21) comprising an area of dual-resting, axially and radially, against the stator (2);
(v) wherein the support means comprise a bearing (22) disposed inside the journal (21) and **characterized in that**;
(vi) the journal (21) comprises an internal wall (28) with a shoulder (34) oriented on the side opposite to the stator (2), so that the mounting of the bearing is configured to be performed after that of the journal, the bearing (22) resting against the shoulder (34).

2. The induction motor (1) according to claim 1, **characterized in that** the journal (21) comprises an external wall (27) and **in that** the dual-resting area is formed by the end of the external wall (27) of the journal (21) and one face of an annular rib (30) located on the external wall (27).

3. The induction motor (1) according to claim 2, **characterized in that** the annular rib (30) forms a first shoulder (31) shaped so as to axially rest against the stator (2) and delimits a span (32) shaped so as to radially rest against the stator (2).

4. The induction motor (1) according to claim 1, **characterized in that** it comprises means for constraining the bearing (22) in the direction of the shoulder (34).

5. The induction motor (1) according to claim 4, **characterized in that** the constraining means comprise a resting member (44) secured to a rotor shaft (4) and return means configured to press the bearing (22) against the shoulder (34).

6. The induction motor (1) according to any of claims 1 to 5, **characterized in that** the rotor assembly comprises a rotor (3) extending at least partially inside the journal (21).

7. The induction motor (1) according to any of claims 1 to 6, **characterized in that** it comprises an electrically-insulating element (39) interposed between the journal (21) and the internal skirt (13).

8. The induction motor (1) according to claim 7, **characterized in that** the journal (21) comprises an external wall (27) covered by the electrically-insulating element (39), and comprising second (41) and third (42) opposite shoulders, against which the electrically-insulating element (39) rests, while being configured to block it axially with respect to the journal (21).

9. The induction motor (1) according to any of claims 7 or 8, **characterized in that** the electrically-insulating element (39) is overmolded on the journal (21).

10. The induction motor (1) according to any of claims 1 to 9, **characterized in that** the motor (1) comprises a similar second journal (21) and **in that** the two journals (21) are disposed symmetrically in the motor (1).

11. The induction motor (1) according to any of claims 1 to 9, **characterized in that** the bowl (9) comprises an external skirt (12) configured to conform to the shape of the internal wall of the hollow body of the longitudinal actuator, the external skirt (12) having a contour (18) intended to rest against one of the ends (7) of the stator (2), the contour (18) comprising a plurality of tabs (19) extending in the continuation of the external skirt (12) and each housed in a recess made on the external circumference of the stator (2), so that the bowl (9) is configured to center the stator (2) in the hollow body of the substantially longitudinal actuator.
